# NEUE EUROPÄISCHE PATENTSCHRIFT

(11) **EP 2 086 770 B2**
(45) Veröffentlichungstag und Bekanntmachung des Hinweises auf die Entscheidung über den Einspruch: **24.08.2016**
(45) Hinweis auf die Patenterteilung: 29.02.2012
(21) Anmeldenummer: 07819656.5
(22) Anmeldetag: 07.11.2007
(51) Int. Cl.: B42D 25/00, G06K 19/18

(54) **TRAGBARER DATENTRÄGER**
PORTABLE DATA STORAGE MEDIUM
SUPPORT DE DONNÉES PORTABLE

(30) Priorität: 08.11.2006 DE 102006052651
(43) Veröffentlichungstag der Anmeldung: 12.08.2009
(73) Patentinhaber: Giesecke & Devrient GmbH, 81677 München (DE)
(72) Erfinder: KOMAREK, Peer-Alexander, 85598 Baldham (DE)
(74) Vertreter: Klunker . Schmitt-Nilson . Hirsch
(86) Internationale Anmeldenummer: PCT/EP2007/009646
(87) Internationale Veröffentlichungsnummer: WO 2008/055670

(56) Entgegenhaltungen:
- EP-A- 0 283 233
- EP-A- 0 328 086
- EP-A- 0 372 837
- EP-A- 1 527 903
- EP-A2- 0 283 233
- EP-A2- 0 328 086
- EP-A2- 1 527 903
- WO-A1-2006/015733
- DE-B1- 2 907 004
- FR-A- 2 449 930
- FR-A1- 2 449 930
- US-A1- 2003 173 406
- US-A1- 2003 173 406

## Beschreibung

Die Erfindung betrifft einen tragbaren Datenträger. Weiterhin betrifft die Erfindung ein Verfahren zur Herstellung eines tragbaren Datenträgers.

Tragbare Datenträger werden beispielsweise im bargeldlosen Zahlungsverkehr, bei Zugangskontrollen, als Ausweisdokumente usw. eingesetzt. Bei vielen Anwendungen werden tragbare Datenträger eingesetzt, die graphische Darstellungen aufweisen. Soweit die graphischen Darstellungen sicherheitsrelevant sind, sollten sie gegen Manipulationen geschützt sein. Bei den graphischen Darstellungen kann es sich beispielsweise um eine Fotographie des Inhabers des tragbaren Datenträgers handeln.

Aus der US 5,421,619 ist es bekannt, auf eine Ausweiskarte, die eine Fotographie eines autorisierten Benutzers aufweist, einen Streifen eines Aufzeichnungsmaterials für eine Laser-Beschriftung aufzubringen. Mittels eines Laserstrahls wird eine durch Aufbereitung der Fotographie ermittelte Abbildung in der Nähe der Fotographie in das Aufzeichnungsmaterial eingeschrieben.

Bei der bekannten Ausweiskarte werden die Fotographie und die daraus abgeleitete Abbildung als separate graphische Elemente wahrgenommen.

Aus der DE 41 34539A1 ist ein Aufzeichnungsträger mit farbigen Bildinformationen bekannt. Die Bildinformationen sind in mindestens zwei Informationsteile aufgeteilt, welche kongruent überlagert sind und sich zur Gesamtinformation ergänzen. Die Teilinformationen sind in getrennten Arbeitsschritten aufgebracht. Mindestens eine der Teilinformationen liegt in von außen nicht zugänglicher Form vor. Insbesondere ist die Bildinformation in einen Schwarzweiß- und einen Farbanteil aufgeteilt. Der Schwarzweißanteil ist beispielsweise mittels eines Laserstrahlschreibers als ein Graustufenbild in eine transparente Folienschicht des Aufzeichnungsträgers eingebrannt.

Die kongruente Überlagerung der Teilinformationen ist relativ aufwendig und begrenzt die Gestaltungsmöglichkeiten bei der Darstellung der Bildinformationen.

Die EP 0 372 837 A2 beschreibt einen tragbaren Datenträger, der zwei graphische Darstellungen aufweist, wobei die zweite Darstellung gegenüber derersten Darstellung in bezug auf Farbe, Schwärzung oder räumliche Auflösung verändert ist. Jedoch stellt die zweite Darstellung keine irreversible Änderung des Trägers dar und ist daher manipulierbar.

Der Erfindung liegt die Aufgabe zugrunde, mit vertretbarem Aufwand eine Manipulation einer graphischen Darstellung eines tragbaren Datenträgers möglichst zuverlässig zu verhindern.

Diese Aufgabe wird durch die Merkmalskombination des Anspruchs 1 sowie des Anspruchs 13 gelöst.

Der erfindungsgemäße tragbare Datenträger weist einen Träger mit einer ersten graphischen Darstellung und einer zweiten graphischen Darstellung auf. Die zweite graphische Darstellung ist besser gegen Manipulationen geschützt als die erste graphische Darstellung. Weiterhin ist die zweite graphische Darstellung als Referenz zur Feststellung von Manipulationen der ersten graphischen Darstellung ausgebildet. Der erfindungsgemäße tragbare Datenträger zeichnet sich dadurch aus, dass lediglich ein Teilbereich der ersten graphischen Darstellung mit der zweiten graphischen Darstellung lateral überlappt und außerhalb des Teilbereichs kein lateraler Überlapp zwischen sehen der ersten graphischen Darstellung und der zweiten graphischen Darstellung vorhanden ist und dass die zweite graphische Darstellung als eine Laser beschriftung ausgebildet ist.

Die Erfindung hat den Vorteil, dass die Zusammengehörigkeit der ersten und zweiten graphischen Darstellung gut erkennbar ist, ein guter Schutz vor Manipulationen der ersten graphischen Darstellung vorhanden ist und die erste graphische Darstellung dennoch ohne nennenswerte Einschränkung bei der Gestaltungsfreiheit mit herkömmlichen Verfahren erzeugt werden kann. Es kann eine gute Erkennbarkeit der ersten graphischen Darstellung gewährleistet werden, da diese nur im Teilbereich mit der zweiten graphischen Darstellung überlappt.

Die erste graphische Darstellung kann mehrfarbig ausgebildet sein. Weiterhin kann der tragbare Datenträger so ausgebildet sein, dass die erste graphische Darstellung im Teilbereich nicht sichtbar ist. Dadurch wird eine deutliche Trennung zwischen der ersten und der zweiten graphischen Darstellung erreicht und eine gute Erkennbarkeit derzweiten graphischen Darstellung gewährleistet. Weiterhin ist es möglich, dass die erste graphische Darstellung im Teilbereich transparent, teiltransparent oder homogen ausgebildet ist. Dies bedeutet, dass den jeweiligen Besonderheiten des vorgesehenen Anwendungsfalls Rechnung getragen werden kann.

Die erste grafische Darstellung ist drucktechnisch hergestellt. Dies ermöglicht ein hohes Qualitätsniveau bei vergleichsweise geringen Herstellungskosten.

Die erste grafische Darstellung des tragbaren Datentraegers ist als eine Fotographie des Inhabers des tragbaren Datenträgers ausgebildet.

Die zweite graphische Darstellung kann als ein Graustufenbild ausgebildet sein. Graustufenbilder können mit vertretbarem Aufwand sehr manipulationssicher ausgebildet werden.

In einem bevorzugten Ausführungsbeispiel weist die zweite graphische Darstellung ein kleineres Format auf als die erste graphische Darstellung. Dies hat den Vorteil, dass nur eine kleine Fläche für die zweite graphische Darstellung benötigt wird und sich die Beeinträchtigung der ersten graphischen Darstellung somit in Grenzen hält. Ein weiterer Vorteil besteht darin, dass der Aufwandfürdie Erzeugung derzweiten graphischen Darstellung gering gehalten wird. Insbesondere kann die erste graphische Darstellung wenigstens zweimal, vorzugsweise wenigstens dreimal so groß sein wie die zweite graphische Darstellung. Außerdem kann die zweite graphische Darstellung bereichsweise außerhalb der ersten graphischen Darstellung ausgebildet sein. Dadurch kann die Beeinträchtigung der ersten graphischen Darstellung weiter reduziert werden.

Die zweite graphische Darstellung ist als eine irreversible Änderung des Trägers ausgebildet. Dadurch ist eine Manipulation der zweiten graphischen Darstellung nahezu unmöglich. Weiterhin kann die zweite graphische Darstellung wenigstens partiell im Inneren des Trägers ausgebildet sein. Dies hat den Vorteil dass der für eine Manipulation erforderliche Zugang zu der zweiten graphischen Darstellung erheblich erschwert wird und eine Manipulation ohne eine sichtbare Beschädigung des Trägers kaum möglich ist. Die zweite graphische Darstellung ist als eine Laserbeschriftung ausgebildet. Die Laserbeschriftungen haben den Vorteil, dass sie irreversibel und damit sehr manipulationssicher sind und dass es sich um eine Technologie handelt, die in einem großen Umfang eingesetzt wird und somit gut verfügbar und vergleichsweise preiswert ist.

Die zweite graphische Darstellung ist aus der ersten graphischen Darstellung abgeleitet. Die zweite grafische Darstellung stellt das gleiche Motiv dar wie die erste graphische Darstellung. Dadurch ist es möglich, durch einen einfachen Vergleich der ersten und derzweiten graphischen Darstellungfestzustellen, ob die erste graphische Darstellung manipuliert wurde.

Weiterhin ist der tragbare Datenträger vorzugsweise so ausgebildet, dass die zweite graphische Darstellung im Teilbereich sichtbar ist. Der Teilbereich ist vorzugsweise als ein Kreissegment, insbesondere als ein Viertelkreis, ausgebildet. Dies ermöglicht eine Platzierung der zweiten graphischen Darstellung derart, dass die erste graphische Darstellung nur geringfügig beeinflusst wird. Dabei ist es weiterhin vorteilhaft, wenn der Teilbereich an die Außenkontur der ersten graphischen Darstellung angrenzt. Eine besonders geringe Beeinträchtigung der ersten graphischen Darstellung lässt sich in der Regel dann erzielen, wenn der Teilbereich in einer Ecke der ersten graphischen Darstellung angeordnet ist.

Der tragbare Datenträger kann ein Format gemäß der Norm ISO 7810, insbesondere das Format ID-1, aufweisen. Weiterhin kann der tragbare Datenträger insbesondere als ein Ausweisdokument, z.B. im Format ID-3 ausgebildet sein.

Die Erfindung betrifft weiterhin ein Verfahren zur Herstellung eines tragbaren Datenträgers gemäss Anspruch 13.

Besonders vorteilhaft ist es, wenn die graphischen Informationen innerhalb des Teilbereichs der ersten graphischen Darstellung modifiziert werden, bevor der Träger mit der ersten graphischen Darstellung versehen wird. Auf diese Weise kann der Teilbereich hinsichtlich derzweiten graphischen Darstellung optimal gestaltet werden. Insbesondere kann die erste graphische Darstellung in dem Teilbereich transparent, teiltransparent oder homogen ausgebildet werden.

Die Erfindung wird im Folgenden anhand der in der Zeichnung dargestellten Ausführungsbeispiele näher erläutert.

### Es zeigen

- Fig. 1: ein Ausführungsbeispiel eines erfindungsgemäß ausgebildeten tragbaren Datenträgers in einer schematischen Aufsicht,
- Fig. 2: den in Fig. 1 dargestellten tragbaren Datenträger in einer schematischen Schnittdarstellung,
- Fig. 3: eine schematische Darstellung für die der Graphik zugrunde liegenden Bildinformation,
- Fig. 4: die Graphik in der Form, in der sie auf den Träger des tragbaren Datenträgers aufgebracht wird und
- Fig. 5: eine schematische Darstellung fürdie Bildinformation der Kontrollgraphik.

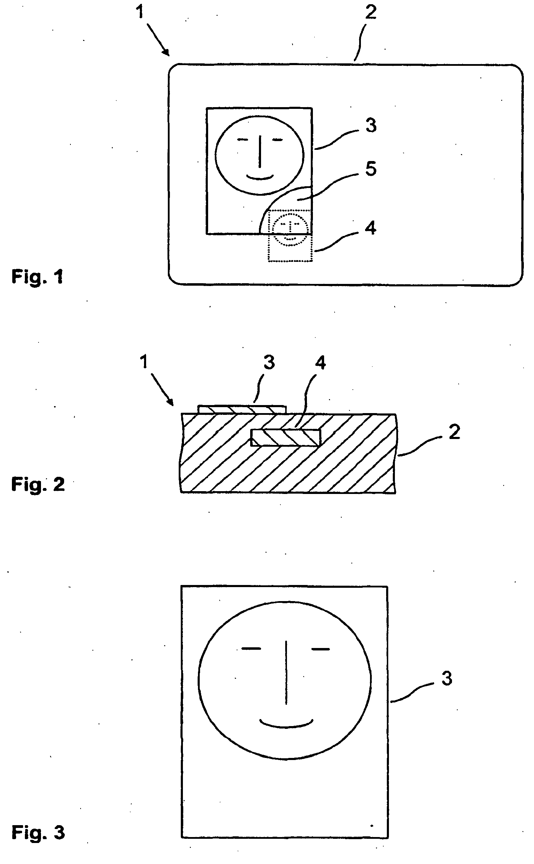

Fig.1 zeigt ein Ausführungsbeispiel eines erfindungsgemäß ausgebildeten tragbaren Datenträgers 1 in einer schematischen Aufsicht. Eine zugehörige schematische Schnittdarstellung zeigt Fig. 2. Der tragbare Datenträger 1 ist beispielsweise als eine Ausweiskarte, eine Gesundheitskarte, ein Führerschein usw. ausgebildet und weist einen kartenförmigen Träger 2 auf, der beispielsweise aus einem Kunststoffmaterial hergestellt ist. Dabei kann der tragbare Datenträger 1 gemäß der Norm ISO 7810 ausgebildet sein und insbesondere die Formate ID-1 oder ID-3 aufweisen. Ebenso kann der tragbare Datenträger 1 als ein Dokument ausgebildet sein, das ein Blatt oder mehrere Blätter aufweist und vorzugsweise aus Papier hergestellt ist.

Auf dem Träger 2 sind eine Graphik 3 und eine Kontrollgraphik 4 ausgebildet, wobei die Kontrollgraphik 4 aus Gründen der Übersichtlichkeit gestrichelt dargestellt ist. Die Graphik 3 weist beispielsweise ein rechtekkiges Format auf und kann insbesondere als ein Passfoto des Inhabers des tragbaren Datenträgers 1 ausgebildet sein. Die Graphik 3 weist für sich genommen keinen ausreichenden Schutz vor Manipulationen auf und ist beispielsweise mittels eines Druckverfahrens, insbesondere Retransfer-, Thermosublimations-, Thermotransferoder Tintenstrahldruck hergestellt. Die Graphik 3 kann ein- oder mehrfarbig ausgebildet sein. Wie aus Fig. 2 hervorgeht, ist die Graphik 3 insbesondere auf der Oberfläche des Trägers 2 angeordnet.

DieKontrollgraphik4weisteinkleineresFormat als die Graphik 3 auf und ist teilweise innerhalb eines Überlappbereichs 5 angeordnet, der als ein Teilbereich der Graphik 3 ausgebildet ist. Außerhalb des Überlappbereichs 5 kommt es nicht zu einem Überlapp zwischen der Graphik 3 und der Kontrollgraphik 4. Die Außenkontur des Überlappbereichs 5 ist insbesondere als ein Viertelkreis ausgebildet. Die Kontrollgraphik 4 ist weitgehend manipulationssicher ausgebildet, d. h. ein Manipulationsversuch an der Kontrollgraphik4führtzu einer sichtbaren Beschädigung des tragbaren Datenträgers 1. Die Kontrollgraphik 4 ist mittels eines Laserstrahls in den Träger 2 eingeschrieben. Wie aus Fig. 2 hervorgeht, ist die Kontrollgraphik 4 vorzugsweise im Inneren des Trägers 2 angeordnet, so dass der Träger 2 bei einer Manipulation der Kontrollgraphik 4 beschädigt wird.

Die Kontrollgraphik 4 dient dazu, Manipulationen an der Graphik 3 ermitteln zu können. Hierzu ist die Kontrollgraphik 4 so ausgebildet, dass zwischen der optischen Information der Kontrollgraphik 4 und der optischen Information der Graphik 3 ein Zusammenhang besteht, so dass es durch einen Vergleich der Graphik 3 mit der Kontrollgraphik 4 möglich ist, Manipulationen der Graphik 3 zu erkennen. Die Kontrollgrafik 4 ist ebenfalls als ein Passfoto des Inhabers des tragbaren Datenträgers 1 ausgebildet. Dabei weist die Kontrollgraphik 4 vorzugsweise eine geringere Auflösung als die Graphik 3 auf und ist der Graphik 3 im Überlappbereich 5 nicht kongruent überlagert, d. h. im Überlappbereich 5 stimmen die Bildinformation der Graphik 3 und die Bildinformation der Kontrollgraphik 4 nicht überein.

Die Herstellung des tragbaren Datenträgers 1 wird im folgenden anhand der Fig. 3 bis 5 beschrieben.

Dertragbare Datenträger 1 wird zunächst ohne die Graphik 3 und ohne die Kontrollgraphik 4 hergestellt. Dann wird die Graphik 3 auf den Träger 2 des tragbaren Datenträgers 1 drucktechnisch aufgebracht.

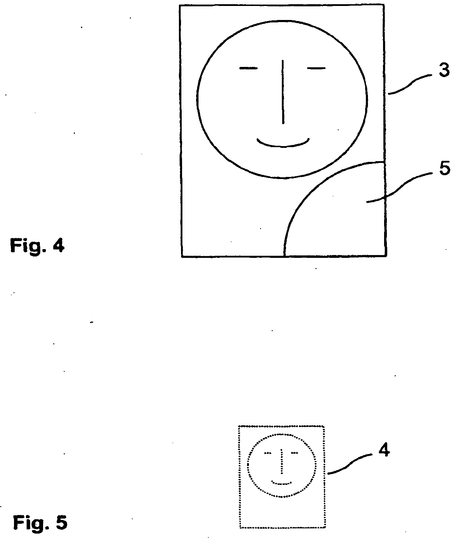

Fig. 3 zeigt eine schematische Darstellung für die der Graphik 3 zugrunde liegenden Bildinformation. Bei dieser Bildinformation handelt es sich um ein Passbild des Inhabers des tragbaren Datenträgers 1, das in Fig. 3 durch eine stilisierte Darstellung eines Gesichts wiedergegeben ist. Die Bildinformation kann farbig oder als eine Grauwertverteilung vorliegen, vorzugsweise in einer Auflösung von wenigstens 300 DPI (dots per inch). Es sind prinzipiell beliebige Bildformate möglich, wobei ein softframe vorgesehen sein kann und Bildverbesserungsmaßnahmen mittels Software zur Anwendung kommen können. Aus der in Fig. 3 dargestellten Bildinformation wird die in Fig. 4 dargestellte Graphik 3 ermittelt.

Fig. 4 zeigt die Graphik 3 in der Form, in der sie auf den Träger 2 des tragbaren Datenträgers 1 aufgebracht wird. Die Graphik 3 weist im Bereich ihrer rechten unteren Ecke den Überlappbereich 5 auf, der als ein Kreissegment, insbesondere als ein Viertelkreis, ausgebildet ist. Andere geometrische Formen des Überlappbereichs 5 sind ebenfalls möglich. Der Überlappbereich 5 kann so ausgebildet sein, dass die Bildinformation der Graphik 3 dort nicht sichtbar ist und stattdessen zum Beispiel eine weiße Fläche ausgebildet ist. Ebenso kann der Überlappbereich 5 auch transparent oder halbtransparent gehalten sein, so dass etwaige darunter befindliche graphische Elemente vollständig sichtbar sind bzw. durchscheinen.

Aus der in Fig. 3 dargestellten Bildinformation 5 wird die Bildinformation der Kontrollgraphik 4 ermittelt. Die Kontrollgraphik 4 weist vorzugsweise ein kleineres Format als die Graphik 3 auf. Beispielsweise kann die Größe der Kontrollgraphik 4 einem Drittel der Größe der Graphik 3 entsprechen. Weiterhin wird die Kontrollgraphik 4 vorzugsweise als ein Grauwertbild mit beispielsweise 256 Grauwerten dargestellt. Es sind auch weniger Grauwerte möglich, wobei eine reine Schwarz/Weiß-Darstellung (zwei Grauwerte) nur bedingt geeignet ist. Die Bildinformation der Kontrollgraphik 4 ist in Fig. 5 dargestellt.

Die in Fig. 5 dargestellte Bildinformation der Kontrollgraphik 4, die analog zu Fig.1 wiederum gestrichelt dargestellt ist, wird mit Hilfe eines Laserstrahls zumindest teilweise innerhalb des Überlappbereichs 5 der Graphik 3 in den Träger 2 des tragbaren Datenträgers 1 irreversibel eingeschrieben. Der auf diese Weise hergestellte tragbare Datenträger 1 ist in Fig.1 dargestellt. Bei dem in Fig.1 dargestellten Ausführungsbeispiel des tragbaren Datenträgers 1 ist die Kontrollgraphik 4 teils innerhalb und teils außerhalb der Graphik 3 angeordnet. Der Überlappbereich 5 ist dabei so gestaltet, dass die für die Nutzung der Graphik 3 relevanten Bildinformationen - d. h. die Teile des Passfotos, die für die Identifizierung des Inhabers des tragbaren Datenträgers 1 benötigt werden, wie z.B. die Gesichtskontur - außerhalb des Überlappbereichs 5 angeordnet und damit ungehindert sichtbar sind. Dies bedeutet, dass die Nutzung der Graphik 3 durch die Kontrollgraphik 4 nicht beeinträchtigt wird. Gleichzeitig wird durch den Überlapp zwischen der *35* Graphik 3 und der Kontrollgraphik 4 deutlich, dass zwischen der Graphik 3 und der Kontrollgraphik 4 ein Zusammenhang besteht. Weiterhin wird durch die räumliche Nähe der Graphik 3 und der Kontrollgraphik 4 das Vergleichen der Graphik 3 mit der Kontrollgraphik 4 erleichtert.

Zusätzlich zur Graphik 3 und zur Kontrollgraphik 4 kann dertragbare Datenträger 1 weitere Elemente aufweisen, die nicht figürlich dargestellt sind. Beispielsweise kann dertragbare Datenträger 1 einen integrierten Schaltkreis zur Speicherung und/oder Verarbeitung von Informationen aufweisen. Ebenso kann dertragbare Datenträger 1 einen Magnetstreifen aufweisen. Es können auf dem tragbaren Datenträger 1 auch ein- oder mehrdimensionale Sicherheitselemente, wie beispielsweise Barcodes angeordnet sein, die drucktechnisch aufgebracht oder mit Hilfe eines Lasers eingeschrieben werden.

## Patentansprüche

1. Tragbarer Datenträger mit einem Träger (2), der eine erste graphische Darstellung (3) und eine zweite graphische Darstellung (4) aufweist, wobei die zweite graphische Darstellung (4) besser gegen Manipulationen geschützt ist als die erste Darstellung, aus der ersten graphischen Darstellung (3) abgeleitet und als Referenz zur Feststellung von Manipulationen der ersten graphischen Darstellung (3) ausgebildet ist, **dadurch gekennzeichnet, dass** lediglich ein Teilbereich (5) der ersten graphischen Darstellung (3) mit der zweiten graphischen Darstellung (4) lateral überlappt, dass außerhalb des Teilbereichs (5) kein lateraler Überlapp zwischen der ersten graphischen Darstellung (3) und der zweiten graphischen Darstellung (4) vorhanden ist, dass die erste graphische Darstellung (3) drucktechnisch hergestellt ist und die zweite graphische Darstellung (4) als eine Laserbeschriftung ausgebildet ist und dass die zweite graphische Darstellung (4) das gleiche Motiv darstellt wie die erste graphische Darstellung (3), wobei die erste graphische Darstellung (3) als eine Fotographie des Inhabers des tragbaren Datenträgers (1) ausgebildet ist und wobei die zweite graphische Darstellung (4) als eine Fotographie des Inhabers des tragbaren Datenträgers (1) ausgebildet ist.

2. Tragbarer Datenträger nach Anspruch 1, **dadurch gekennzeichnet, dass** die erste graphische Darstellung (3) ein- oder mehrfarbig ausgebildet ist.

3. Tragbarer Datenträger nach einem der vorhergehenden Ansprüche, **dadurch gekennzeichnet, dass** die erste graphische Darstellung (3) im Teilbereich (5) nicht sichtbar ist.

4. Tragbarer Datenträger nach einem der vorhergehenden Ansprüche, **dadurch gekennzeichnet, dass** die erste graphische Darstellung (3) im Teilbereich (5) transparent, teiltransparent oder homogen ausgebildet ist.

5. Tragbarer Datenträger nach einem der vorhergehenden Ansprüche, **dadurch gekennzeichnet, dass** die zweite graphische Darstellung (4) als ein Graustufenbild ausgebildet ist.

6. Tragbarer Datenträger nach einem der vorhergehenden Ansprüche, **dadurch gekennzeichnet, dass** die zweite graphische Darstellung (4) ein kleineres Format aufweist als die erste graphische Darstellung (3).

7. Tragbarer Datenträger nach einem der vorhergehenden Ansprüche, **dadurch gekennzeichnet, dass** die erste graphische Darstellung (3) wenigstens zweimal, vorzugsweise wenigstens dreimal so groß ist wie die zweite graphische Darstellung (4).

8. Tragbarer Datenträger nach einem der vorhergehenden Ansprüche, **dadurch gekennzeichnet, dass** die zweite graphische Darstellung (4) bereichsweise außerhalb der ersten graphischen Darstellung (3) ausgebildet ist.

9. Tragbarer Datenträger nach einem der vorhergehenden Ansprüche, **dadurch gekennzeichnet, dass** der Teilbereich (5) an die Außenkontur der ersten graphischen Darstellung (3) angrenzt.

10. Tragbarer Datenträger nach einem der vorhergehenden Ansprüche, **dadurch gekennzeichnet, dass** die zweite graphische Darstellung (4) wenigstens partiell im Inneren des Trägers (2) ausgebildet ist.

11. Tragbarer Datenträger nach einem der vorhergehenden Ansprüche, **dadurch gekennzeichnet, dass** die zweite graphische Darstellung (4) im Teilbereich (5) sichtbar ist.

12. Tragbarer Datenträger nach einem der vorhergehenden Ansprüche, **dadurch gekennzeichnet, dass** der Teilbereich (5) als ein Kreissegment, insbesondere als ein Viertelkreis, ausgebildet ist.

13. Verfahren zur Herstellung eines tragbaren Datenträgers (1), wobei
- ein Träger (2) mit einer ersten graphischen Darstellung (3) und einer zweiten graphischen Darstellung (4) versehen wird,
- die zweite graphische Darstellung (4) besser gegen Manipulationen geschützt wird als die erste graphische Darstellung (3),
- die zweite graphische Darstellung (4) aus der ersten graphischen Darstellung (3) abgeleitet wird und
- die zweite graphische Darstellung (4) als Referenz zur Feststellung von Manipulationen der ersten graphischen Darstellung (3) ausgebildet wird, **dadurch gekennzeichnet, dass** lediglich ein Teilbereich (5) der ersten graphischen Darstellung (3) mit der zweiten graphischen Darstellung (4) lateral überlappend ausgebildet wird, dass außerhalb des Teilbereichs (5) kein lateraler Überlapp zwischen der ersten graphischen Darstellung (3) und der zweiten graphischen Darstellung (4) ausgebildet wird, dass die erste graphische Darstellung (3) drucktechnisch hergestellt wird und die zweite graphische Darstellung (4) als eine Laserbeschriftung ausgebildet wird und dass die zweite graphische Darstellung (4) das gleiche Motiv darstellt wie die erste graphische Darstellung (3), wobei die erste graphische Darstellung (3) als eine Fotographie des Inhabers des tragbaren Datenträgers (1) ausgebildet wird und wobei die zweite graphische Darstellung (4) als eine Fotographie des Inhabers des tragbaren Datenträgers (1) ausgebildet wird.

14. Verfahren nach Anspruch 13, **dadurch gekennzeichnet, dass** die graphischen Informationen innerhalb des Teilbereichs (5) der ersten graphischen Darstellung (3) modifiziert werden, bevor der Träger (2) mit der ersten graphischen Darstellung (3) versehen wird.

15. Verfahren nach einem der Ansprüche 13 oder 14, **dadurch gekennzeichnet, dass** die erste graphische Darstellung (3) in dem Teilbereich (5) transparent, teiltransparent oder homogen ausgebildet wird.

## Claims

1. A portable data carrier having a carrier (2) which has a first graphical representation (3) and a second graphical representation (4), whereby the second graphical representation (4) is better protected against tampering than the first representation, is derived from the first graphical representation (3) and configured as a reference for detecting tampering with the first graphical representation (3), **characterized in that** only a partial area (5) of the first graphical representation (3) laterally overlaps with the second graphical representation (4), that there is no lateral overlap between the first graphical representation (3) and the second graphical representation (4) outside the partial area (5), that the first graphical representation (3) is produced by printing technology and the second graphical representation (4) is configured as a laser inscription, and that the second graphical representation (4) represents the same motif as the first graphical representation (3), whereby the first graphical representation (3) is configured as a photograph of the owner of the portable data carrier (1), and whereby the second graphical representation (4) is configured as a photograph of the owner of the portable data carrier (1).

2. The portable data carrier according to claim 1, **characterized in that** the first graphical representation (3) is configured to be mono- or polychromatic.

3. The portable data carrier according to either of the previous claims, **characterized in that** the first graphical representation (3) is invisible in the partial area (5).

4. The portable data carrier according to any of the previous claims, **characterized in that** the first graphical representation (3) is configured to be transparent, partly transparent or homogeneous in the partial area (5).

5. The portable data carrier according to any of the previous claims, **characterized in that** the second graphical representation (4) is configured as a grayscale image.

6. The portable data carrier according to any of the previous claims, **characterized in that** the second graphical representation (4) has a smaller format than the first graphical representation (3).

7. The portable data carrier according to any of the previous claims, **characterized in that** the first graphical representation (3) is at least twice, preferably at least three times, as big as the second graphical representation (4).

8. The portable data carrier according to any of the previous claims, **characterized in that** the second graphical representation (4) is formed partially outside the first graphical representation (3).

9. The portable data carrier according to any of the previous claims, **characterized in that** the partial area (5) borders on the outside contour of the first graphical representation (3).

10. The portable data carrier according to any of the previous claims, **characterized in that** the second graphical representation (4) is formed at least partially inside the carrier (2).

11. The portable data carrier according to any of the previous claims, **characterized in that** the second graphical representation (4) is visible in the partial area (5).

12. The portable data carrier according to any of the previous claims, **characterized in that** the partial area (5) is configured as a circular segment, in particular as a quadrant.

13. A method for producing a portable data carrier (1), wherein
- a carrier (2) is provided with a first graphical representation (3) and a second graphical representation (4),
- the second graphical representation (4) is better protected against tampering than the first graphical representation (3),
- the second graphical representation (4) is derived from the first graphical representation (3), and
- the second graphical representation (4) is configured as a reference for detecting tampering with the first graphical representation (3), **characterized in that** only a partial area (5) of the first graphical representation (3) is configured to laterally overlap with the second graphical representation (4), and no lateral overlap between the first graphical representation (3) and the second graphical representation (4) is formed outside the partial area (5), that the first graphical representation (3) is produced by printing technology and the second graphical representation (4) is configured as a laser inscription, and that the second graphical representation (4) represents the same motif as the first graphical representation (3), whereby the first graphical representation (3) is configured as a photograph of the owner of the portable data carrier (1), and whereby the second graphical representation (4) is configured as a photograph of the owner of the portable data carrier (1).

14. The method according to claim 13, **characterized in that** the graphical information within the partial area (5) of the first graphical representation (3) is modified before the carrier (2) is provided with the first graphical representation (3).

15. The method according to either of claims 13 to 14, **characterized in that** the first graphical representation (3) is configured to be transparent, partly transparent or homogeneous in the partial area (5).

## Revendications

1. Support de données portable comprenant un support (2) qui comporte une première représentation graphique (3) et une deuxième représentation graphique (4), la deuxième représentation graphique (4) étant mieux protégée contre les manipulations que la première représentation, étant déduite de la première représentation graphique (3) et étant réalisée en tant que référence pour la constatation de manipulations de la première représentation graphique (3), **caractérisé en ce qu'**uniquement une zone partielle (5) de la première représentation graphique (3) est latéralement en chevauchement avec la deuxième représentation graphique (4), **en ce que**, à l'extérieur de la zone partielle (5), il n'y a aucun chevauchement latéral entre la première représentation graphique (3) et la deuxième représentation graphique (4), et **en ce que** la première représentation graphique (3) est confectionnée par impression et la deuxième représentation graphique (4) est réalisée en tant qu'une inscription au laser et **en ce que** la deuxième représentation graphique (4) représente le même motif que la première représentation graphique (3), cependant que la première représentation graphique (3) est réalisée en tant qu'une photographie du titulaire du support de données (1) portable et cependant que la deuxième représentation graphique (4) est réalisée en tant qu'une photographie du titulaire du support de données (1) portable.

2. Support de données portable selon la revendication 1, **caractérisé en ce que** la première représentation graphique (3) est réalisée sous forme unicolore ou multicolore.

3. Support de données portable selon une des revendications précédentes, **caractérisé en ce que** la première représentation graphique (3) n'est pas visible dans la zone partielle (5).

4. Support de données portable selon une des revendications précédentes, **caractérisé en ce que** la première représentation graphique (3) est réalisée dans la zone partielle (5) sous forme transparente, partiellement transparente ou homogène.

5. Support de données portable selon une des revendications précédentes, **caractérisé en ce que** la deuxième représentation graphique (4) est réalisée sous forme d'une image à niveaux de gris.

6. Support de données portable selon une des revendications précédentes, **caractérisé en ce que** la deuxième représentation graphique (4) présente un format inférieur à celui de la première représentation graphique (3).

7. Support de données portable selon une des revendications précédentes, **caractérisé en ce que** la première représentation graphique (3) est au moins deux fois, de préférence au moins trois fois plus grande que la deuxième représentation graphique (4).

8. Support de données portable selon une des revendications précédentes, **caractérisé en ce que** la deuxième représentation graphique (4) est réalisée par endroits à l'extérieur de la première représentation graphique (3).

9. Support de données portable selon une des revendications précédentes, **caractérisé en ce que** la zone partielle (5) est contiguë au contour extérieur de la première représentation graphique (3).

10. Support de données portable selon une des revendications précédentes, **caractérisé en ce que** la deuxième représentation graphique (4) est réalisée au moins partiellement à l'intérieur du support (2).

11. Support de données portable selon une des revendications précédentes, **caractérisé en ce que** la deuxième représentation graphique (4) est visible dans la zone partielle (5).

12. Support de données portable selon une des revendications précédentes, **caractérisé en ce que** zone partielle (5) est réalisée sous forme d'un segment de cercle, en particulier sous forme d'un quart de cercle.

13. Procédé de fabrication d'un support de données portable (1),
- un support (2) étant pourvu d'une première représentation graphique (3) et d'une deuxième représentation graphique (4),
- la deuxième représentation graphique (4) étant mieux protégée contre les manipulations que la première représentation graphique (3),
- la deuxième représentation graphique (4) étant déduite de la première représentation graphique (3) et
- la deuxième représentation graphique (4) étant réalisée en tant que référence pour la constatation de manipulations de la première représentation graphique (3), **caractérisé en ce qu'**uniquement une zone partielle (5) de la première représentation graphique (3) est latéralement en chevauchement avec la deuxième représentation graphique (4), **en ce que**, à l'extérieur de la zone partielle (5), il n'y a aucun chevauchement latéral entre la première représentation graphique (3) et la deuxième représentation graphique (4), et **en ce que** la première représentation graphique (3) est confectionnée par impression et la deuxième représentation graphique (4) est réalisée en tant qu'une inscription au laser et **en ce que** la deuxième représentation graphique (4) représente le même motif que la première représentation graphique (3), cependant que la première représentation graphique (3) est réalisée en tant qu'une photographie du titulaire du support de données (1) portable et cependant que la deuxième représentation graphique (4) est réalisée en tant qu'une photographie du titulaire du support de données (1) portable.

14. Procédé selon la revendication 13, **caractérisé en ce que** les informations graphiques à l'intérieur de la zone partielle (5) de la première représentation graphique (3) sont modifiées avant que le support (2) soit pourvu de la première représentation graphique (3)

15. Procédé selon une des revendications 13 ou 14, **caractérisé en ce que** la première représentation graphique (3) est réalisée dans la zone partielle (5) sous forme transparente, partiellement transparente ou homogène.
